Europäisches Patentamt

European Patent Office

Office européen des brevets

(11) Publication number: **0 221 589**

A1

# (12) EUROPEAN PATENT APPLICATION

(21) Application number: 86201727.4

(22) Date of filing: 07.10.86

(51) Int. Cl.⁴: **H 04 L 11/26**
**H 04 M 1/66**

(30) Priority: 08.10.85 NL 8502740

(43) Date of publication of application:
13.05.87 Bulletin 87/20

(84) Designated Contracting States:
AT BE CH DE ES FR GB IT LI LU SE

(71) Applicant: Staat der Nederlanden (Staatsbedrijf der
Posterijen, Telegrafie en Telefonie)
P.O. Box 430
NL-2260 AK Leidschendam(NL)

(72) Inventor: van der Does, Willem
9 Patrijshof
NL-9765 JD Paterswolde(NL)

(54) Device for establishing a connection between a telecommunication network and a controllable system, such as a computer system, provided with an access control unit controllable via a separate network terminal.

(57) The invention relates to an access control device (TBO), which is controlled via a first network terminal (1NA), and which will establish a connection between a second network terminal (2NA1 or 2NA2) and a controllable system (C), such as a computer system, for a predetermined time, after said first network terminal has been dialled. If the second network terminal is dialled within that predetermined time, the system can be controlled, while the connection is maintained, if necessary. It is an advantage that the system to be controlled is accessible only via a combination of (at least) two separate network terminals, which have to be dialled after each other within a predetermined time. For that reason it is for outsiders practically impossible to find out if the relevant terminals relate to a special terminal (in this case a computer terminal).

FIG.1

EP 0 221 589 A1

Croydon Printing Company Ltd

Device for establishing a connection between a telecommunication network and a controllable system, such as a computer system, provided with an access control unit controllable via a separate network terminal.

A. Background of the invention

### 1. Field of the invention

The invention relates to a device for establishing a connection between a telecommunication network and a system controllable by or via this network. In particular this controllable system can be a computer system which is accessible via for example the public telephone network.

### 2. State of the art

According to the present-day state of the art computer and other systems are often accessible via a telecommunication network, e.g. a telephone network, in which cases one or more terminals of such systems are connected, generally via a modem, to one or more telephone connections. By dialling the relevant subscriber's number via the telephone network a connection to the computer system will be established. If the computer system is available, the modem will transmit e.g. a tone as an indication that the logging in into the system can be started, which tone is transmitted after the connection has been established.

It is a known fact that it occurs that telephone subscribers, often with the help of automatic apparatus, try to find out telephone numbers which are connected to a computer system with a view to obtain (unauthorized) access to such a system. With the help of said automatic apparatus telephone numbers are consecutively dialled and the characterizing tone that may occur after that is detected. When such a tone is detected, an attempt will be made to break into the system.

The object of the invention is to solve the aforesaid problem by providing a device with the characteristics mentioned below, which makes it practically impossible to find out, in the way mentioned above, computer and other systems connected to the telephone network. The invention is based on the insight that it is practically out of the question that a combination of two (or more) unknown telephone numbers can be found within a short time (e.g. 1 minute), the more so as the realization of every connection also takes up some time (e.g. 15 seconds on an average).

B. Summary of the invention

The invention comprises a device for establishing a connection between a telecommunication network, e.g. a telephone network, and a system controllable by or via this network, e.g. a computer system, characterized by at least one access control unit, which is disposed in the communication path between at least one network terminal and at least one terminal of the system to be controlled, which access control unit keeps up a connection between its terminals for a set time on reception of a call signal from the network. The access control unit for the reception of said call signal is preferably connected to a first network terminal, whereas the control unit for the transmission of information or further control signals is disposed in the communication path between at least one second network terminal and at least one terminal of the system to be controlled.

The access control unit preferably comprises a first detecting element, which is connected to the first network terminal and serves for detecting control signals from the network, e.g. a call signal, when the relevant terminal has been dialled. On reception of such a control signal the detecting element activates a delay means, which activates a first contact control unit for a predetermined time from the moment of activation. During this time, which is determined by the delay interval of the delay means, the first contact control unit causes a contact element to close the communication path between the computer system and a second and following network terminal, if any. In this way the computer system, in this case its modem(s), is connected to the network during the delay interval of the delay means.

When during the delay interval of the delay means the second or following network terminal is dialled, the connection to the computer system will be established via the closed aforesaid contact element. This contact element will now remain closed as long as the connection to the computer system, respectively its modem, lasts, because of the fact that the device, according to a further elaboration of the invention, comprises a second detecting element, which is connected to the connection between the contact element and the terminal of the computer system, which second detecting element will activate a second contact control unit as soon as and as long as the connection between the network and the computer system is active via the relevant second or following network terminal. In the activated state - so as long as the second detecting element detects that the connection is active - the second control unit keeps the contact element closed, even after the delay interval of the aforementioned delay means has come to an end and, consequently, the contact element is no longer kept closed by said first contact control unit.

According to the invention one or more first network terminals can be connected to one or more access control units for the connection of one or more second network terminals to one or more terminals of a computer system or other system. Regarding the latter could be thought of e.g. a system used for remotely controllable plants, such as processing plants, bridges, pumps, transmitters and so forth.

The device according to the invention only allows the possibility of obtaining access to the relevant system after consecutively dialling, within a time limit, two different network numbers (e.g. telephone numbers), which number combination can in fact not be found out, not even when use is made of automatic means, within this time limit. Dialling only the first network number nor only the second or following network number will result in the reception of a characterizing tone, so that in that way detection will not take place. Apart from that it is even possible to protect the first network terminal in the same way as in which the second network terminal is protected by the access control unit, which protection is described in what precedes, namely by disposing between the first network terminal and said access control unit another access control unit, which is controlled via another first network terminal. So this measure can in fact always be repeated. For each protection stage thus obtained a following terminal has to be dialled within a certain time limit after a network terminal has been dialled.

C. References

None.

D. Short description of the figures

Figure 1 shows a block diagram of a device according to the invention, in which an access control unit is controlled via a first network terminal, and is disposed between two I/O-terminals of a computer system and two second network terminals.

Figure 2 shows a further elaboration of figure 1.

Figure 3 shows a detailed circuit embodiment of figure 2.

Figure 4 shows an alternative for the same.

Figure 5 shows an embodiment of the invention for switching on and switching off a transmitter.

Figure 6 shows an embodiment of the invention in which the access control unit is connected to the same network terminal both for controlling and for transmission.

E. Description of the figures and embodiments

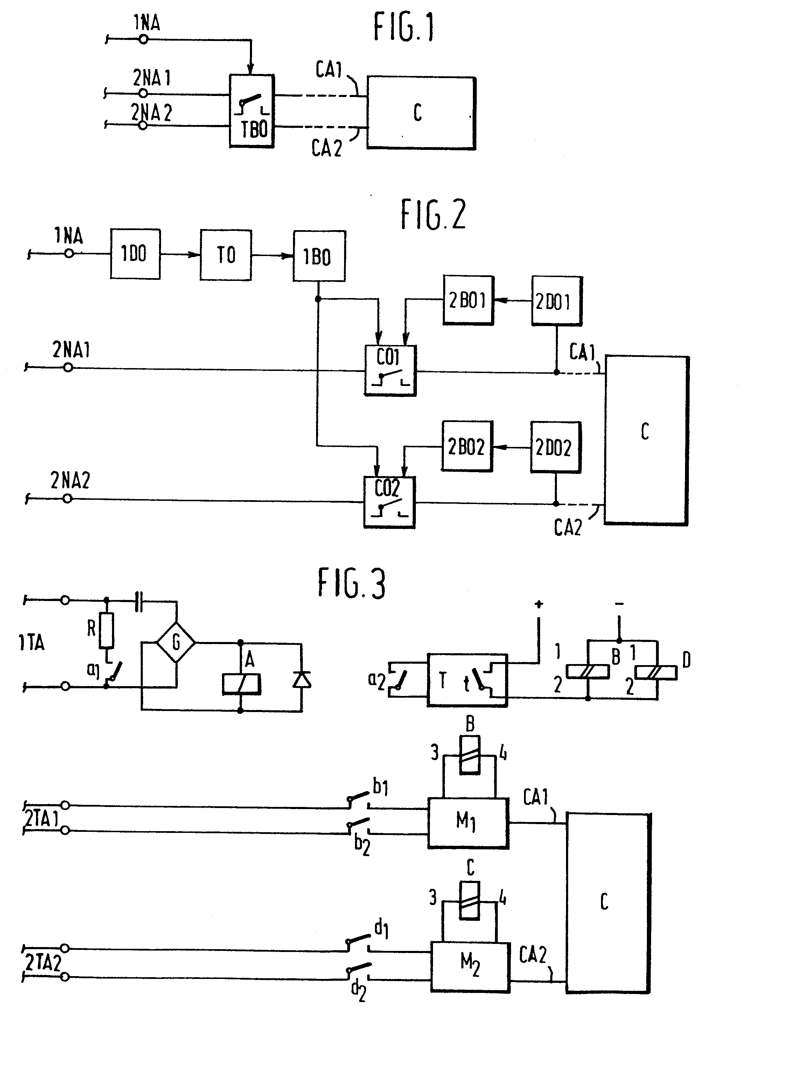

Figure 1 shows diagrammatically an access control unit TBO, which is disposed between two separated second network terminals 2NA1 and 2NA2, and two separated I/O-terminals CA1 and CA2 of a computer system C. The access control unit TBO is controlled by dialling a first network terminal 1NA, due to which the access control unit TBO receives an access control signal from the network, in consequence of which the connection between the second network terminal 2NA1 or 2NA2, respectively and the computer terminal CA1 or CA2, respectively will be closed during the delay interval of a delay means disposed in the access control unit TBO. If after this one of the second network terminals 2NA1 or 2NA2 is dialled within the delay interval of the delay means, a connection will be established between the network, in this case the dialling subscriber, and the computer system via the closed access control unit TBO. As soon as this connection is established, the closing of the access control unit TBO will be ensured by this unit itself, as long as the connection lasts. If one of the second network terminals is not dialled until after the delay interval of the time means is exceeded, no connection to the computer system will be established by the network, because the access control unit TBO has already interrupted the connection between the second network terminals 2NA1 and 2NA2, respectively again.

Figure 2 shows a diagrammatic representation of the elements

- 6 -                                      **0221589**

preferably belonging to the device. The first network terminal 1NA mentioned before is connected to a first detecting element 1D0, which detects if the first network terminal 1NA is dialled by the network, for example by detecting a call signal. As soon as the detecting element detects the dialling of the first network terminal, it will cause a delay means TO to start, which in its turn will activate, during its delay interval, a first contact control unit 1BO. This contact control unit 1BO causes a contact element CO1 and a contact element CO2 to close the connection between the second network terminal 2NA1 and the computer terminal CA1 between the second network terminal 2NA2 and the computer terminal CA2, respectively. If after this one of the second network terminals 2NA1 or 2NA2 is dialled - after which the connection to the first network terminal will usually be interrupted (which apart from that will not influence the further running of the delay means TO) - a connection to the computer system C will be established viá the closed contact element CO1 or CO2, respectively. As soon as and as long as there is a connection between the network and the computer system C and one of the second network terminals 2NA1 or 2NA2, this will be detected by a second detecting element 2DO1 or 2DO2, respectively, for example by the detection of information exchanging and control signals between the network and the computer system C (in this case its modems).

The second detecting element 2DO1 or 2DO2 activates a second contact control unit 2BO1 or 2BO2, respectively, which keeps the associated contact element CO1 or CO2, respectively closed. In this way the contact element CO1 or CO2, respectively will remain closed as long as the second detecting element 2DO1 or 2DO2, respectively detects that the connection between the network and the computer system C is active.

Figure 3 shows a detailed circuit embodiment of the embodiment of the invention shown in figure 2. A relay A is connected to the clamps of a first telephone connection 1TA via a rectifier circuit G and a capacitor. As soon as this first telephone connection ITA is dialled from the telephone network, relay A will be energized by the call signal ("ringing current"). Relay A closes a contact al, in consequence of which the telephone line will be closed via a resistor. A contact a2 of relay A activates a time switch T. After the contact al has closed the telephone line, the call signal will be stopped by the telephone network, as a result of which the relay A will drop, in consequence of which the connection to the telephone network will be interrupted and the dialling subscriber will receive a busy tone from the network. Time switch T, which was started by contact a2, energizes, during its delay time, a relay B and a relay D via a first winding 1-2. These relays B and D serving as a first contact control unit make the pairs of contacts b1-b2 and d1-d2, respectively close, in consequence of which the connection between a second telephone connection 2TA1 and the I/O terminal CA1, or between a second telephone connection 2TA2 and the I/O terminal CA2 of the computer system C, respectively will be established.

If one of the second telephone connections 2TA1 or 2TA2 is dialled from the telephone network as long as the contacts b1-b2 and d1-d2 are closed, so during the delay time of the time switch T, a connection to an I/O-modem M1 or M2 will be established by the dialling subscriber. Each of the modems M1 and M2 comprises a detector, which will energize relay B and relay D via a second winding 3-4, respectively, as soon as and as long as the connection between the telephone network, in this case the dialling subscriber, and the relevant modem is active. In consequence of this the contacts b1-b2 or d1-d2 will remain closed as long as the connection between the telephone network and the computer system lasts. If a second telephone connection 2TA1 or 2TA2 is not dialled within the delay time of the time switch T the contacts b1-b2 or d1-d2 will drop after the time switch T has come to an end.

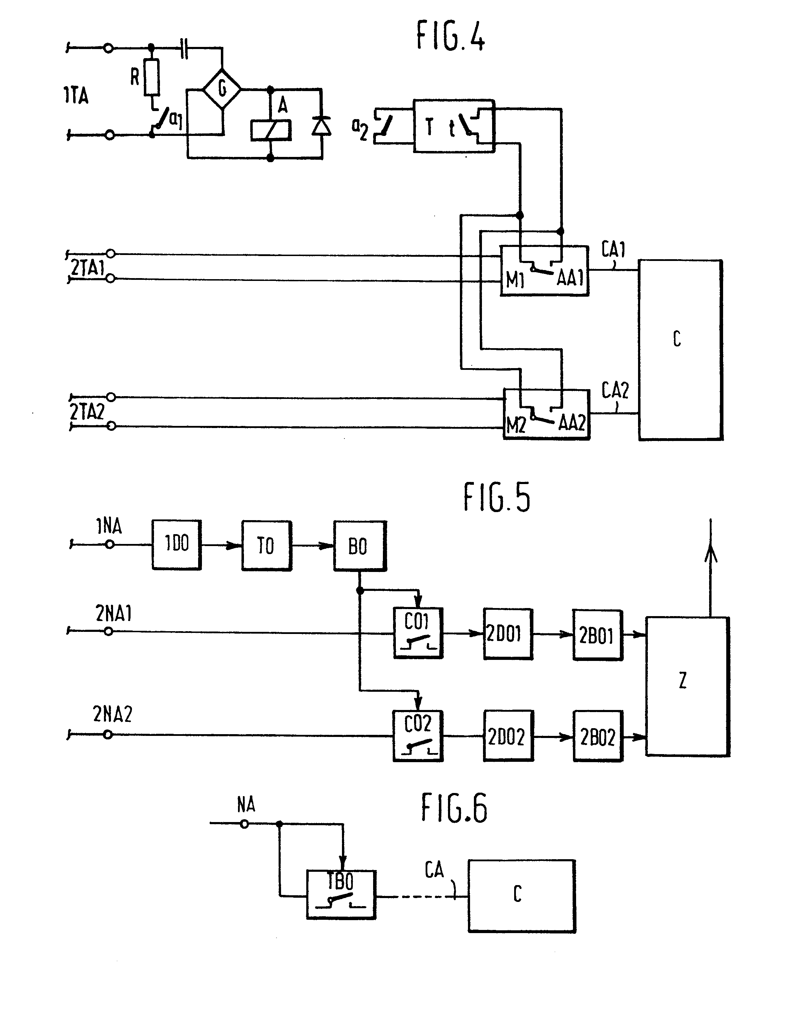

Figure 4 shows that the circuit can be simplified by connecting the control output of the time switch T in parallel to the so-called "Auto-Answer"-switches AA1 and AA2 of the modems M1 and M2, respectively. Such a switch AA1 or AA2 serves to arrange if a modem may automatically answer or not a call from the network. The "Auto-Answer"-switches AA1 and AA2 have to be in an open position, so that a direct call from the network via the second telephone connections 2TA1 and 2TA2 will not be answered by the modems M1 and M2. Only when first a call from the network takes place via the first telephone connection 1TA, due to which the contact t of the time switch T will be closed, a call from a network via a second telephone connection 2TA1 or 2TA2 can be answered by a modem M1 or M2 during the delay time of the time switch T, because of the fact that the open switch AA1 or AA2, respectively is bridged during that time by the t-contact.

Figure 5 shows an embodiment of the invention for switching on and off a plant, in this case a transmitter. Just as in the embodiment shown in figure 2 a first network terminal 1NA is connected to a first detecting element 1DO, which will start a delay means TO, as soon as it detects a call signal, which delay means, in its turn, activates, during its delay interval, a control element BO, in consequence of which the contact elements CO1 and CO2 will establish a connection between two second network terminals 2NA1 and 2NA2 and two second detecting elements 2DO1 and 2DO2, respectively. These second detecting elements 2DO1 and 2DO2, which are connected to their corresponding second network terminal during the delay interval of the delay means TO, will detect the call signal from the network as soon as the second network terminal is dialled within the delay interval of the delay means TO. The detecting element 2DO1 or 2DO2, which thus detects a call, delivers a control signal to a plant, in the present example a transmitter, in consequence of which this plant will be switched on or off. For example the transmitter Z will be switched on via the second network terminal 2NA1 and switched off via the second network terminal 2NA2.

Figure 6 shows an embodiment of the invention in which the access control unit TBO is activated from the network via a network terminal NA, whereas after that the transmission will take place via the very same network terminal NA. After the network terminal NA has been dialled from the network, the access control unit TBO will be activated by the call signal, after which the unit TBO makes the connection between the network and the network terminal NA (possibly after a predetermined time) interrupt. The delay means (TO in e.g. figure 2) disposed in the access control unit TBO keeps up the connection between the terminal CA of the computer system C for a predetermined time. If during this time the network terminal is dialled again from the network, a connection to the computer system C (in this case to a modem of the same) will be established via the access control unit TBO switched through.

It is remarked that the device according to the invention is not limited to the use in co-operation with line networks, but can also be utilized in co-operation with radio networks. Moreover, the device according to the invention can be used in co-operation with analog networks as well as with digital networks.

The position in which a device according to the invention is disposed in one or more network terminals or subscriber's lines between an immediately preceding switching system forming part of the network, and the system to be controlled is not prescribed. Consequently, such a device can form part of the system to be controlled, such as e.g. a modem of a computer which can be dialled telephonically or of said switching system in the telecommunication network, such as e.g. a telephone exchange.

F. Claims

1. Device for establishing a connection between a telecommunication network and a system controllable by or via this network, characterized by at least one access control unit (TBO), which is disposed in the communication path between at least one network terminal (NA) and at least one terminal (CA) of the system (C,Z) to be controlled, which access control unit (TBO) keeps up a connection between its terminals for a set time on reception of a call signal from the network.

2. Device in accordance with claim 1, characterized in that for the reception of said call signal the access control unit (TBO) is connected to a first network terminal (1NA) and, moreover, is disposed in the communication path between at least one second network terminal (2NA) and at least one terminal (CA) of the system (C,Z) to be controlled.

3. Device in accordance with claim 1 or 2, characterized in that the access control unit (TBO) comprises at least one first detecting element (1DO) for detecting control signals from the network, which detecting element is connected to a network terminal (1NA), as well as at least one delay means (TO) co-operating with said first detecting element, which delay means will be activated by the detecting element after the detection of a call signal, while the delay means activates at least one first control element (1BO) during its delay interval, which first control element causes at least one contact element to establish a connection between at least one terminal (CA) of the system (C,Z) to be controlled and at least one network terminal (2NA).

4. Device in accordance with claim 3, characterized by at least one second detecting element (2DO1, 2DO2), which is connected to the side of the contact element (CO1, CO2, respectively) not facing the network terminal (2NA1, 2NA2, respectively), which detecting element (2DO) will activate at least one second control element (2BO1, 2BO2) after the detection of a control signal from the network.

5. Device in accordance with claim 4, characterized in that at least one second control element (2BO) co-operates with the contact element (CO) and in that this control element (2BO) will close or keep closed the contact element (CO) as soon as this control element (2BO) is activated by the relevant second detecting element (2DO) and as long as the connection between the network and the system (C) to be controlled is active.

6. Device in accordance with claim 4, characterized in that at least one second control element (2BO) is connected to the system (Z) to be controlled.

7. Device for establishing a connection between a telecommunication network and a computer system in accordance with one of the claims 1 up to 5 inclusive.

8. Device for establishing a connection between a telecommunication network and a system switchable via that network in accordance with one of the claims 1 up to 4 inclusive and 6.

9. Device in accordance with claim 5, characterized in that the detecting element (1DO) comprises a first relay (A), which is connected to a telephone connection (1TA) via a rectifier circuit (G), a contact (a2) of which relay is connected to a time switch (T) which will be activated by this contact as soon as the relay is energized from the telephone network, in that a first winding (1-2) of at least one second relay (B,D) is connected to the time switch, the contacts (b1-b2, d1-d2) of which second relay are disposed between a modem (M) connected to an I/O-connection (CA) of a computer system (C) and a telephone connection (2TA), which contacts connect the modem to this telephone connection during the energization of said second relay, and in that, moreover, the second relay is provided with a second winding (3-4), which is connected to the modem and will be energized by this modem as soon as and as long as the connection between the modem and the telephone network is active.

10. Telecommunication exchange provided with a device in accordance with one of the preceding claims.

FIG.1

FIG.2

FIG.3

# FIG.4

# FIG.5

# FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-3 984 637 (CAUDILL)<br>* Column 2, line 3 - column 7, line 18; figures * | 1,7-10 | H 04 L 11/26<br>H 04 M 1/66 |
| A | US-A-4 430 728 (BEITEL)<br><br>* Column 3, line 24 - column 8, line 14; figures * | 1,7,8, 10 | |
| A | GB-A-2 144 946 (HASHIMOTO)<br><br>* Page 1, line 72 - page 3, line 119; figures * | 1,7,8, 10 | |

TECHNICAL FIELDS SEARCHED (Int. Cl.4)

H 04 L
H 04 M

The present search report has been drawn up for all claims

| Place of search | Date of completion of the search | Examiner |
|---|---|---|
| THE HAGUE | 14-01-1987 | KEPPENS P.M.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82